# EUROPÄISCHE PATENTSCHRIFT

(11) **EP 2 625 075 B1**
(45) Veröffentlichungstag und Bekanntmachung des Hinweises auf die Patenterteilung: **26.11.2014**
(21) Anmeldenummer: 11763640.7
(22) Anmeldetag: 27.09.2011
(51) Int. Cl.: B60R 21/36

(54) **KRAFTFAHRZEUG MIT EINER SICHERHEITSEINRICHTUNG**
MOTOR VEHICLE WITH A SAFETY DEVICE
VÉHICULE AUTOMOBILE DOTÉ D'UN DISPOSITIF DE SÉCURITÉ NNNNN

(30) Priorität: 05.10.2010 DE 102010041965
(43) Veröffentlichungstag der Anmeldung: 14.08.2013
(73) Patentinhaber: Bayerische Motoren Werke Aktiengesellschaft, 80809 München (DE)
(72) Erfinder: IVENZ, Udo, 86456 Gablingen (DE); KOESTLER, Ulrich, 85241 Hebertshausen (DE); MEIERHOFER, Walter, 94099 Schmidham (DE); SCHNEIDER, Nadine, 63831 Wiesen (DE)
(86) Internationale Anmeldenummer: PCT/EP2011/066751
(87) Internationale Veröffentlichungsnummer: WO 2012/045612

(56) Entgegenhaltungen:
- DE-A1- 10 059 223
- DE-A1- 10 102 597

## Beschreibung

Die Erfindung betrifft ein Kraftfahrzeug mit einer Sicherheitseinrichtung nach dem Oberbegriff des Patentanspruchs 1.

Aus der DE 100 59 224 A1 ist eine Sicherheitseinrichtung für ein Kraftfahrzeug zum Schutz von Fußgängern bekannt, die einen Airbag umfasst. Der Airbag ist im nicht aktivierten Grundzustand zusammengefaltet am Fahrzeugaufbau angeordnet und deckt im aktivierten, entfalteten Zustand einen Rahmen um eine Windschutzscheibe herum ab. Dazu kann der Airbag ringförmig oder U-förmig aufgebaut sein, wobei er im aktivierten Zustand stets die A-Säulen des Kraftfahrzeugs abdeckt. Zusätzlich umfasst die bekannte Sicherheitseinrichtung eine Windschutzscheibenabdeckung, die durch den Airbag im aufgeblasenen Zustand vor der Windschutzscheibe aufgespannt ist. Durch diese Windschutzscheibenabdeckung kann eine vorteilhafte Energieabsorption in gewissem Maße im zentralen Windschutzscheibenbereich erfolgen, sodass ein Aufprall dort weniger hart ist. Die Windschutzscheibenabdeckung kann aus einem transparenten Material hergestellt sein. Gegebenenfalls ist auf ihrer Unterseite eine zusätzliche Schutzschicht aufgebracht.

In den letzten Jahren wurden die zukünftig maximal zulässigen Beschleunigungswerte für einen Aufprall des Kopfes eines Fußgängers oder Radfahrers auf die Windschutzscheibe deutlich verschärft. Bei zahlreichen Versuchen hat sich herausgestellt, dass die Steifigkeit von Windschutzscheiben stark streuen kann, sodass bei einzeinen Windschutzscheiben bei einem Kopfaufprall die zukünftig maximal zulässigen Beschleunigungswerte unter Umständen überschritten werden könnten.

Aufgabe der Erfindung ist es, ein Kraftfahrzeug mit einer Sicherheitseinrichtung zu schaffen, die bei einer Kollision des Kraftfahrzeugs mit einem Fußgänger oder Radfahrer gewährleistet, dass bei einem Aufprall des Kopfs des Fußgängers oder Radfahrers auf einer Windschutzscheibe des Kraftfahrzeugs die Beschleunigungswerte des Kopfes und damit die möglichen Kopfverletzungen möglichst gering sind.

Diese Aufgabe wird mit einem Kraftfahrzeug mit einer Sicherheitseinrichtung mit den Merkmalen des Patentanspruchs 1 gelöst.

Erfindungsgemäß weist ein Kraftfahrzeug eine Sicherheitseinrichtung zum Schutz von auf das Kraftfahrzeug aufprallenden Fußgängern oder Radfahrern auf, wobei die Sicherheitseinrichtung zumindest einen Airbag umfasst, der im nicht aktivierten Grundzustand zusammengefaltet am Fahrzeugaufbau angeordnet ist und im aktivierten, entfalteten Zustand zumindest einen Teil eines Rahmens um eine Windschutzscheibe herum abdeckt. Im aktivierten, entfalteten Zustand spannt der Airbag dabei eine Windschutzscheibenabdeckung vor der Windschutzscheibe auf, die zumindest einen Bereich aufweist, in dem verteilt mehrere Störkörper auf der der Windschutzscheibe zugewandten Seite der Windschutzscheibenabdeckung angebracht sind. Bei einem Aufprall eines Fußgängers oder Radfahrers mit seinem Kopf auf diesen Bereich wird dieser gegen die Windschutzscheibe gepresst. Dabei verursachen die Störkörper eine Vorschädlgung der Windschutzscheibe, sodass die Steifigkeit der Windschutzscheibe in diesem Bereich reduziert wird. Dadurch gibt die Windschutzscheibe reproduzierbar nach, wenn der Kopf in diesem Bereich aufprallt. Die Kopfbeschleunigungswerte sind geringer, als bei einer nicht vorgeschädigten Windschutzscheibe.

Der Airbag deckt im aktivierten, entfalteten Zustand einen Rahmen um die Windschutzscheibe ab. Diese rahmenartige Form ist erforderlich, um vor der Windschutzscheibe die Windschutzscheibenabdeckung aufspannen zu können. Dazu kann der Airbag ringförmig die gesamte Windschutzscheibe umlaufend umgeben. Vorteilhafterweise deckt er zumindest teilweise oder vollständig die A-Säulen als seitliche Begrenzung der Windschutzscheibe und einen unteren Windlauf als untere Begrenzung der Windschutzscheibe ab. Dies sind die Bereiche des Kraftfahrzeugs, die besonders unnachgiebig sind. Zur Abdeckung dieser Bereiche und zum Aufspannen der Windschutzscheibenabdeckung ist es günstigerweise ausreichend, wenn der Airbag U-förmig ausgebildet ist. Je kleiner der Airbag ist, desto weniger Platz benötigt er im nicht aktivierten, zusammengefalteten Grundzustand und desto schneller ist er aufblasbar.

Die Windschutzscheibenabdeckung kann bevorzugt aus einem Netz oder einer Folie bestehen. Die Folie besteht idealerweise aus einem transparenten Material. Auf diese Weise ist es möglich, dass der Fahrer des Kraftfahrzeugs auch nach einer Kollision mit einem Fußgänger oder Radfahrer mit aktiviertem Airbag durch die transparente Windschutzscheibenabdeckung hindurch noch die Fahrbahn sehen und gegebenenfalls das Kraftfahrzeug kontrolliert zum Stehen bringen kann. Alternativ kann die Windschutzscheibenabdeckung auch aus dem gleichen Gewebe bestehen, aus dem die Hülle des Airbags hergestellt ist. In diesem Fall weist der mittlere Bereich entweder eine Aussparung oder mehrere Löcher auf, durch die hindurch der Fahrer die Fahrbahn noch zumindest teilweise sehen kann.

Die Funktion der Störkörper, die an der Windschutzscheibenabdeckung angebracht sind, besteht darin, die Windschutzscheibe vorzuschädigen, wenn sie durch den aufprallenden Kopf zusammen mit der Windschutzscheibenabdeckung gegen die Windschutzscheibe gedrückt werden. Als Störkörper eignen sich insbesondere Körner. Dabei ist es von Vorteil, wenn die Körner jeweils zumindest eine spitze Ecke und / oder Kante aufweisen. Wenn die Störköper mit diesen Ecken und / oder Kanten gegen die Windschutzscheibe gedrückt werden, beschädigen sie diese besonders stark und verstärken damit den gewünschten Effekt.

Als besonders geeignet haben sich Körner mit einem Durchmesser zwischen 0,5 mm und 2,5 mm erwiesen. Bei zu großen Körnern würde die Gefahr bestehen, dass sich der aufprallende Kopf an den Körnern verletzt, bei zu kleinen Körnern würde die Windschutzscheibe unter Umständen zu wenig vorgeschädigt werden. Geeignet sind sowohl Körner aus einem natürlichen Kornwerkstoff, wie Quarz, Korund oder Schmirgel, als auch Kömer aus einem synthetischen Karnwerkstoff, wie beispielsweise aus einem harten Kunststoff oder aus einem Metall. Wichtig ist, dass die Körner eine ausreichende Härte aufweisen, um die Windschutzscheibe nennenswert vorschädigen zu können. Auch kann die Windschutzscheibenabdeckung mehrere eingearbeitete Drähte aufweisen. Die Störkörper werden dann durch zwei sich kreuzende Drähte gebildet.

Günstigerweise sind die harten Störkörper In einen Schutzkörper aus einem weichen Material eingebettet. Auf diese Weise kann sichergestellt werden, dass die Windschutzscheibe nicht bereits beim Entfalten des Airbags beschädigt wird, sondem ausschließlich dann, wenn tatsächlich ein Fußgänger oder Radfahrer auf die Windschutzscheibenabdeckung aufprallt. In diesem Fall wird der zumindest eine Störkörper durch den jeweiligen Schutzkörper hindurch gegen die Windschutzscheibe gepresst und schädigt diese vor. Dadurch muss die aufgespannte Windschutzscheibenabdeckung auch keinen Mindestabstand zur Windschutzscheibe aufweisen, um Beschädigungen der Windschutzscheibe durch die Störkörper bei Fehlauslösungen des Airbags zu vermeiden.

Vorteilhafterweise sind die Störkörper in regelmäßigen Abständen zueinander an der Windschutzscheibenabdeckung angebracht. Auf diese Weise kann gewährleistet werden, dass unabhängig von der genauen Stelle, an der der Kopf auf die Windschutzscheibenabdeckung aufprallt, diese stets mit Störkörpern gegen die Windschutzscheibe gedrückt wird. Als besonders geeignet hat sich dabei ein Abstand von ca. 1 bis 4 cm der Störkörper zueinander herausgestellt.

Gemäß einer besonders vorteilhaften Ausgestaltung ist die Verteilung der Störkörper so gewählt, dass bei aufgespannter Windschutzscheibenabdeckung in den Bereichen der Windschutzscheibenabdeckung, die vor den besonders steifen Bereichen der Windschutzscheibe zum Liegen kommen, besonders viele Störkörper vorgesehen sind. Auf diese Weise ist es möglich, dass bei einem aufprallenden Kopf eines Fußgängers oder Radfahrers in allen Bereichen der Windschutzscheibe etwa gleich große Beschleunigungswerte entstehen.

Bel den meisten heutigen Kraftfahrzeugen weist die Windschutzscheibe insbesondere in den Randbereichen eine unter Umständen zu große Steifigkeit auf. Daher sind bevorzugt zumindest im Randbereich der Windschutzscheibenabdeckung verteilt mehrere Störkörper auf der der Windschutzscheibe zugewandten Seite der Windschutzschelbenabdeckung angebracht.

In der Zeichnung ist ein Ausführungsbeispiel der Erfindung dargestellt, anhand dessen die Erfindung im Folgenden näher beschrieben wird. Die einzelnen Figuren zeigen in schematischer Derstellungsweise;
- Fig. 1: eine Seitenansicht eines Kraftfahrzeugs mit einer erfindungsgemäßen Sicherheitsvorrichtung,
- Fig. 2: eine Draufsicht auf das in Fig. 1 gezeigte Kraftfahrzeug mit einem aktivierten Airbag,
- Fig. 3: einen Höhenschnitt durch die Windschutzscheibe des in Fig. 2 gezeigten Kraftfahrzeugs und
- Fig. 4: eine vereinfachte Detailansicht einer Windschutzscheibenabdeckung der Sicherheitseinrichtung.

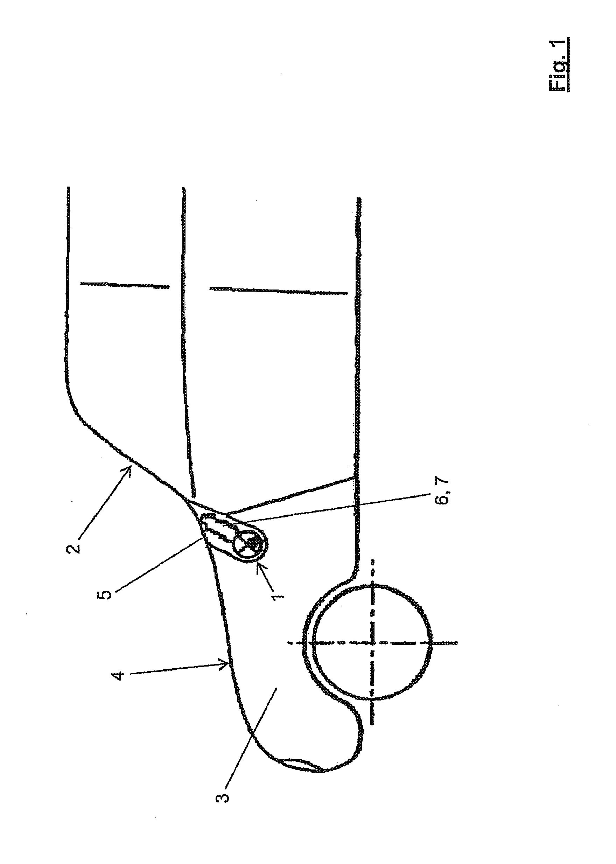

In Fig. 1 ist ein Kraftfahrzeug mit einer Sicherheitsvorrichtung 1 im nicht aktivierten Grundzustand dargestellt. Die Sicherheitsvorrichtung 1 ist im Bereich eines Wasserkastens unterhalb einer Windschutzscheibe 2 des Kraftfahrzeugs angeordnet, Sie ist im Grundzustand am Kraftfahrzeug von außen nicht sichtbar, da sie seitlich von Kotflügeln 3 und oben von einer Fronthaube 4 verdeckt ist. Zwischen der Fronthaube 4 und der Windschutzscheibe 2 besteht ein kleiner Spalt 5.

Die Sicherheitsvorrichtung 1 besteht im Wesentlichen aus einem Airbag 6, einem Airbaggenerator und einer Windschutzscheibenabdeckung 7. Im nicht aktivierten Grundzustand befindet sich der zusammengefaltete Airbag 6 und die zusammengefaltete Windschutzscheibenabdeckung 7 vom Fahrzeugäußeren aus nicht sichtbar im Bereich des Wasserkastens unterhalb der Windschutzscheibe 2, wie es in Fig. 1 gezeigt ist.

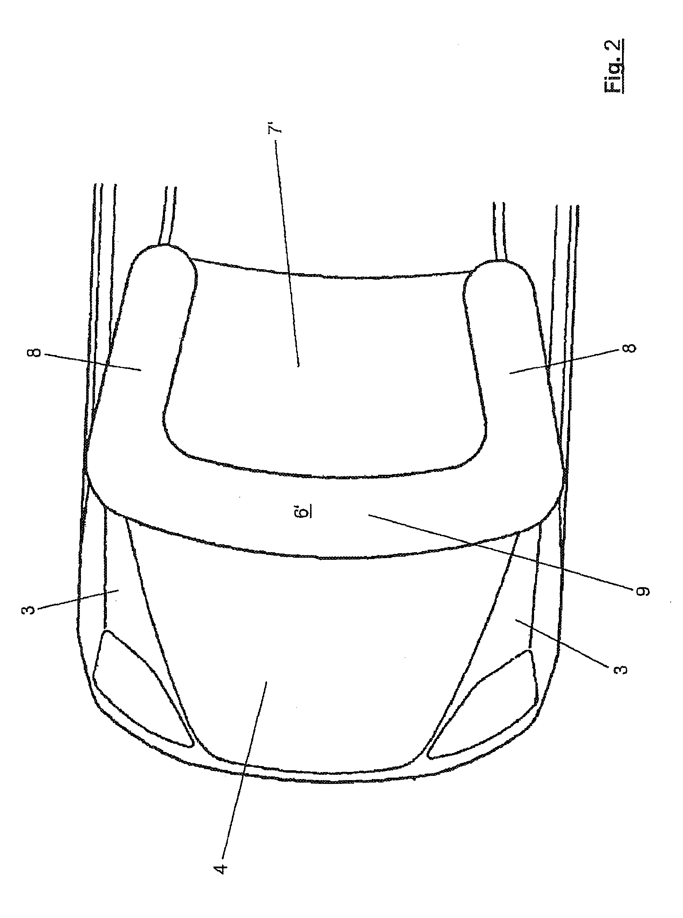

Wenn nun eine Kollision mit einem Fußgänger oder Radfahrer detektiert wird, wird durch ein Steuergerät der Airbaggenerator aktiviert. Dieser füllt den Airbag 6 schlagartig mit Gas. Der Airbag 6 entfaltet sich dabei durch den Spalt 5 zwischen Fronthaube 4 und Windschutzscheibe 2 hindurch. Der aktivierte, entfaltete Airbag 6' weist, wie in Fig. 2 gezeigt, eine U-förmige Form auf. Die beiden freien Schenkel 8 des U-förmigen Airbags 6' kommen dabei vor den A-Säulen des Kraftfahrzeugs zum Liegen und decken diese ab. Der Verbindungsschenkel 9 des Airbags 6', der die beiden freien Schenkel 8 miteinander verbindet, kommt vor dem unteren Windlaut zum Liegen, der die untere Begrenzung der Windschutzscheibe 2 bildet. Sowohl die A-Säulen als auch der untere Windlauf sind tragende Strukturbauteile der Karosserie des Kraftfahrzeugs. Entsprechend weisen sie eine hohe Steifigkeit auf und stellen ein großes Verletzungsrisiko für einen aufprallenden Fußgänger oder Radfahrer dar. Diese Bereiche werden nun durch den aktivierten, entfalteten Airbag 6' abgedeckt, sodass ein Fußgänger oder Radfahrer nicht auf die A-Säule oder den unteren Windlauf aufprallen kann. Vielmehr wird der Aufprall des Fußgängers oder Radfahrers durch den Airbag 6' abgefangen, sodass das Verletzungsrisiko für den Fußgänger oder Radfahrer geringer ist.

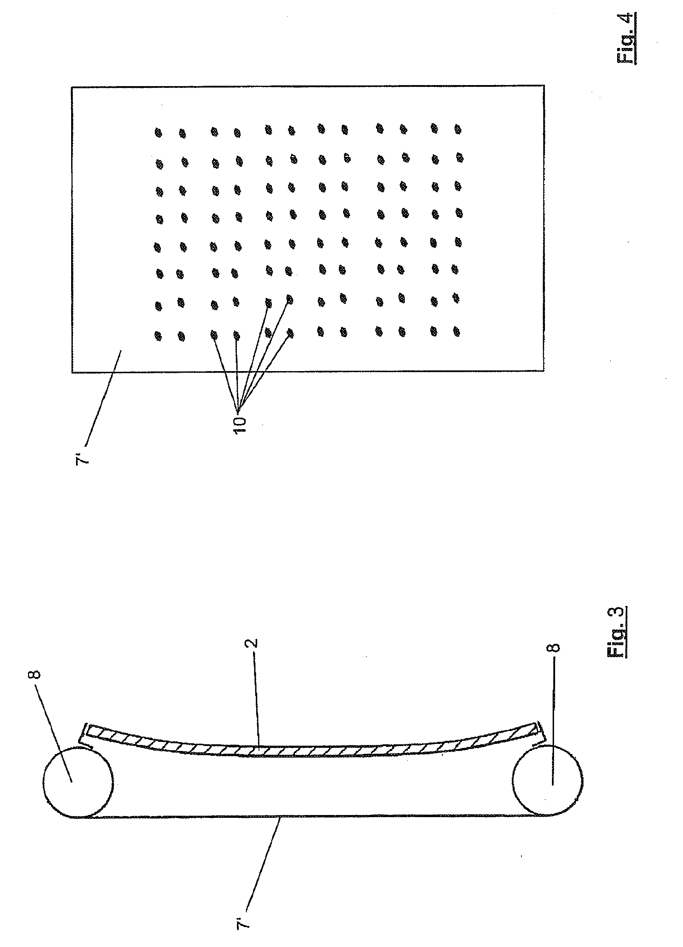

Die Windschutzscheibenabdeckung 7 ist mit den freien Schenkeln 8 und mit dem Verbindungsschenkel 9 verbunden. Der entfaltete Airbag 6' bildet für die entfaltete Windschutzscheibenabdeckung 7' einen Art Rahmen, der die Windschutzscheibenabdeckung 7' vor der Windschutzscheibe 2 aufspannt. Dabei ist die Windschutzscheibenabdeckung 7' zur Windschutzscheibe 2 beabstandet, wie es im Schnitt in Fig. 3 gut zu sehen ist. Dieser Abstand von beispielsweise zehn bis zwanzig Zentimetern ermöglicht es, dass bereits die Windschutzscheibenabdeckung 7' einen kleinen Teil der Aufprallenergie des Fußgängers oder Radfahrers absorbiert, bevor dieser im mittleren Bereich auf die Windschutzscheibe 2 aufprallt.

Die Windschutzscheibenabdeckung 7,7' besteht aus einer durchsichtigen Kunststofffolie, sodass der Fahrer auch bei entfaltetem Airbag 6' noch durch die Windschutzscheibenabdeckung 7' hindurch die Fahrbahn sehen kann, sodass er das Fahrzeug gegebenenfalls nach dem Aufprall des Fußgängers oder Radfahrers koordiniert zum Stillstand bringen kann. Auf der im entfalteten Zustand der Windschutzscheibe 2 zugewandten Seite der Windschutzscheibenabdeckung 7' sind auf dieser zahlreiche scharfkantige Korunde 10 angebracht, wie es schematisch auf dem in Fig. 4 dargestellten Ausschnitt der Windschutzscheibenabdeckung 7 gezeigt ist. Die Korunde 10 sind in relativ gleichmäßigen Abständen von etwa 2,5 cm zueinander angeordnet. Sie weisen eine Korngröße zwischen 1,6 und 2,3 auf, das heißt, die Durchmesser der Korunde 10 liegen zwischen 1,6 mm und 2,3 mm. Die Korunde 10 sind auf der gesamten Fläche der Windschutzscheibenabdeckung 7, 7' verteilt angeordnet, nur ein Randstreifen von ca. 5 cm zu den freien Schenkeln 8 und dem Verbindungsschenkel 9 bleibt frei.

Wenn nun ein Fußgänger oder Radfahrer mit dem Kraftfahrzeug kollidiert, kann dieser mit seinem Kopf entweder auf den Airbag 6' aufprallen, der den Aufprall auf ein biomechanisch verträgliche Weise abfängt, oder auf den Bereich zwischen den beiden freien Schenkeln 8 des Airbags 6'. In diesem Bereich prallt der Kopf zunächst auf die aufgespannte Windschutzscheibenabdeckung 7', die einen kleinen Teil der Aufprallenergie aufnimmt. Der aufprallende Kopf drückt dabei die Windschutzscheibenabdeckung 7' gegen die Windschutzscheibe 2. Dabei dringen die Korunde 10 örtlich in die Windschutzscheibe 2 ein und schädigen diese vor. Dadurch verliert die Windschutzscheibe 2 in diesen vorgeschädigten Bereichen ihre Steifigkeit, sodass sie durch den aufprallenden Kopf lokal bricht und nachgibt. Durch die Vorschädigung durch die Korunde 10 ist die Steifigkeit der Windschutzscheibe 2 auf jeden Fall so gering, dass erhebliche Kopfverletzungen vermieden werden können.

Gegenüber einem vollflächigen Airbag, der nicht nur die A-Säulen und den unteren Windlauf, sondern die gesamte Forntscheibe abdeckt, hat die Erfindung den Vorteil, dass der benötigte Airbag 6 kleiner ist. Er benötigt im zusammengefalteten Grundzustand weniger Bauraum und es ist auch weniger Gas zum Entfalten erforderlich. Auch bleibt erfindungsgemäß die Sicht auf die Fahrbahn für den Fahrer auch bei entfaltetem Airbag größtenteils erhalten, während ein vollflächiger Airbag die Sicht versperren würde.

Zudem wird erfindungsgemäß die Windschutzscheibe 2 nur dann durch die Korunde 10 vorgeschädigt, wenn tatsächlich ein Fußgänger oder Radfahrer auf die Windschutzscheibenabdeckung 7' und damit auf die Windschutzscheibe 2 aufprallt. Bei einer Fehlauslösung ist die entfaltete Windschutzscheibenabdeckung 7' zur Windschutzscheibe 2 beabstandet, sodass die Korunde 10 diese nicht beschädigen können. Die volle Steifigkeit der Karosserie, zu der die Windschutzscheibe 2 maßgeblich beiträgt, bleibt somit erhalten.

Durch die Erfindung wird sichergestellt, dass die Windschutzscheibe 2 auch bei leichten Schwankungen der Herstellparameter stets prozesssicher bei einem aufprallenden Kopf eines Fußgängers oder Radfahrers in ausreichendem Maße nachgibt.

## Patentansprüche

1. Kraftfahrzeug mit einer Sicherheitseinrichtung (1) zum Schutz von auf das Kraftfahrzeug aufprallenden Fußgängern oder Radfahrern, wobei die Sicherheitseinrichtung (1) zumindest einen Airbag (6, 6') umfasst, der im nicht aktivierten Grundzustand zusammengefaltet am Fahrzeugaufbau angeordnet ist und im aktivierten, entfalteten Zustand zumindest einen Teil eines Rahmens um eine Windschutzscheibe (2) herum abdeckt, wobei der Airbag (6') im aktivierten, entfalteten Zustand eine Windschutzscheibenabdeckung (7') vor der Windschutzscheibe (2) aufspannt, **dadurch gekennzeichnet, dass** die Windschutzscheibenabdeckung (7') zumindest einen Bereich aufweist, In dem verteilt mehrere Störkörper (10) auf der der Windschutzscheibe (2) zugewandten Seite der Windschutzscheibenabdeckung (7') angebracht sind, und der gegen die Windschutzscheibe (2) gepresst wird und diese vorschädigt, wenn ein Fußgänger oder Radfahrer mit seinem Kopf auf diesen Bereich der Windschutzscheibenabdeckung (7') aufprallt.

2. Kraftfahrzeug nach Anspruch 1, **dadurch gekennzeichnet, dass** der Airbag (6') zumindest teilweise die A-Säulen als seitliche Begrenzung der Windschutzscheibe (2) und einen unteren Wind lauf als untere Begrenzung der Windschutzscheibe (2) abdeckt.

3. Kraftfahrzeug nach Anspruch 1 oder 2, **dadurch gekennzeichnet, dass** der Airbag (6') U-förmig ausgebildet ist.

4. Kraftfahrzeug nach einem der vorhergehenden Ansprüche, **dadurch gekennzeichnet, dass** die Windschutzscheibenabdeckung (7) ein Netz oder eine Folie ist.

5. Kraftfahrzeug nach einem der vorhergehenden Ansprüche, **dadurch gekennzeichnet, dass** die Windschutzscheibenabdeckung (7) aus einem transparenten und / oder durchsichtigen Material besteht.

6. Kraftfahrzeug nach einem Ansprüche 1 bis 3, **dadurch gekennzeichnet, dass** die Windschutzscheibenabdeckung (7) aus dem gleichen Gewebe besteht, aus dem die Hülle des Airbags (6) gebildet ist.

7. Kraftfahrzeug nach einem der vorhergehenden Ansprüche, **dadurch gekennzeichnet, dass** die Windschutzscheibenabdeckung (7) mehrere Löcher oder mindestens eine Aussparung aufweist.

8. Kraftfahrzeug nach einem der vorhergehenden Ansprüche, **dadurch gekennzeichnet, dass** die Störkörper (10) Körner sind.

9. Kraftfahrzeug nach Anspruch 8, **dadurch gekennzeichnet, dass** die Körner zumindest eine spitze Ecke und / oder Kante aufweisen.

10. Kraftfahrzeug nach Anspruch 8 oder 9, **dadurch gekennzeichnet, dass** die Körner einen Durchmesser zwischen 0,5 mm und 2,5 mm aufweisen.

11. Kraftfahrzeug nach einem der Ansprüche 8 bis 10, **dadurch gekennzeichnet, dass** die Körner aus einem natürlichen Komwerkstoff, wie Quarz, Korund oder Schmirgel, bestehen.

12. Kraftfahrzeug nach einem der Ansprüche 8 bis 10, **dadurch gekennzeichnet, dass** die Körner aus einem synthetischen Kornwerkstoff bestehen.

13. Kraftfahrzeug nach einem der vorhergehenden Ansprüche, **dadurch gekennzeichnet, dass** die Störkörper (10) in regelmäßigen Abständen zueinander an der Windschutzscheibenabdeckung (7) angebracht sind.

14. Kraftfahrzeug nach Anspruch 13, **dadurch gekennzeichnet, dass** die Störkörper (10) in Abständen von ca. 1 bis 4 cm zueinander an der Windschutzscheibenabdeckung (7) angebracht sind.

15. Kraftfahrzeug nach einem der vorhergehenden Ansprüche, **dadurch gekennzeichnet, dass** zumindest im Randbereich der Windschutzscheibenabdeckung (7) mehrere Störkörper (10) auf der der Windschutzscheibe (2) zugewandten Seite der Windschutzscheibenabdeckung (7) angebracht sind.

16. Kraftfahrzeug nach einem der vorhergehenden Ansprüche, **dadurch gekennzeichnet, dass** die Verteilung der Störkörper (10) so gewählt ist, dass bei aufgespannter Windschutzscheibenabdeckung (7') in den Bereichen der Windschutzscheibenabdeckung (7'), die vor den besonders steifen Bereichen der Windschutzscheibe (2) zum Liegen kommen, besonders viele Störkörper (10) vorgesehen sind.

## Claims

1. A motor vehicle comprising a safety device (1) for protecting pedestrians or cyclists colliding with the vehicle, wherein the safety device (1) comprises at least one airbag (6, 6') which when not activated is folded up on the vehicle body and when activated and unfolded covers at least a part of a frame round a windscreen (2), wherein the airbag (6'), when activated and unfolded, stretches over a cover (7') in front of the windscreen (2), **characterised in that** the cover (7') has at least one region in which a number of energy dissipaters (10) are distributed on the side of the cover (7') facing the windscreen (2) and are pressed against the windscreen (2) and initially damage it if a pedestrian's or cyclist's head strikes said region of the windscreen cover (7').

2. A vehicle according to claim 1, **characterised in that** the airbag (6') at least partly covers the A-columns and bounds the sides of the windscreen (2) and covers a bottom apron and bounds the bottom edge of the windscreen (2).

3. A vehicle according to claim 1 or claim 2, **characterised in that** the airbag (6') is U-shaped.

4. A vehicle according to any of the preceding claims, **characterised in that** the cover (7) is a net or sheet.

5. A vehicle according to any of the preceding claims, **characterised in that** the cover (7) is made of a transparent and/or translucent material.

6. A vehicle according to any of the claims 1 to 3, **characterised in that** the cover (7) is made of the same fabric as the airbag (6) case.

7. A vehicle according to any of the preceding claims, **characterised in that** the cover (7) has a number of holes or at least one opening.

8. A vehicle according to any of the preceding claims, **characterised in that** the energy dissipators (10) are grains or pellets.

9. A vehicle according to claim 8, **characterised in that** the grains have at least one sharp corner and/or edge.

10. A vehicle according to claim 8 or claim 9, **characterised in that** the grains have a diameter between 0.5 and 2.5 mm.

11. A vehicle according to any of claims 8 to 10, **characterised in that** the grains are made of a natural material such as quartz, corundum or emery.

12. A vehicle according to any of claims 8 to 10, **characterised in that** the grains are made of a synthetic material.

13. A vehicle according to any of the preceding claims, **characterised in that** the energy dissipaters (10) are disposed at regular distances from one another on the windscreen cover (7).

14. A vehicle according to claim 13, **characterised in that** the energy dissipaters (10) are disposed at about 1 to 4 cm from one another on the windscreen cover (7).

15. A vehicle according to any of the preceding claims, **characterised in that** at least in the edge region of the windscreen cover (7), a number of energy dissipaters (10) are disposed on the side of the cover (7) facing the windscreen (2).

16. A vehicle according to any of the preceding claims, **characterised in that** when the cover (7) is mounted, the energy dissipaters (10) are distributed so that an especially large number of energy dissipaters (10) are provided in those regions of the cover (7') lying in front of the especially rigid regions of the windscreen (2).

## Revendications

1. Véhicule automobile équipé d'une installation de sécurité (1) pour protéger des piétons ou des cyclistes entrant en collision avec le véhicule,
l'installation de sécurité (1) comportant au moins un coussin gonflable (airbag) (6, 6') qui, à l'état non activé, replié est installé dans la carrosserie du véhicule et qui à l'état activé, déployé, couvre au moins une partie du cadre entourant le pare-brise (2),
le coussin gonflable (6') à l'état activé, déployé développant une couverture de pare-brise (7') devant le pare-brise (2),
véhicule **caractérisé en ce que**
la couverture de pare-brise (7') comporte au moins une région dans laquelle sont répartis plusieurs organes perturbateurs (10) sur le côté de la couverture (7') tourné vers le pare-brise (2) et qui est pressé contre le pare-brise (2) pour les écraser préventivement lorsqu'un piéton ou un cycliste entre en collision avec sa tête dans cette région de la couverture de pare-brise (7').

2. Véhicule automobile selon la revendication 1,
**caractérisé en ce que**
le coussin gonflable (6') couvre au moins en partie les colonnes A limitant latéralement le pare-brise (2) et un déflecteur inférieur comme limitation inférieure du pare-brise (2).

3. Véhicule automobile selon la revendication 2,
**caractérisé en ce que**
le coussin gonflable (6') a une forme en U.

4. Véhicule automobile selon l'une quelconque des revendications précédentes,
**caractérisé en ce que**
la couverture de pare-brise (7) est un filet ou un film.

5. Véhicule automobile selon l'une quelconque des revendications précédentes,
**caractérisé en ce que**
la couverture de pare-brise (7) est en une matière transparente et/ou translucide.

6. Véhicule automobile selon les revendications 1 à 3,
**caractérisé en ce que**
la couverture de pare-brise (7) est dans le même tissu que celui de l'enveloppe du coussin gonflable (6).

7. Véhicule automobile selon l'une quelconque des revendications précédentes,
**caractérisé en ce que**
la couverture de pare-brise (7) comporte plusieurs trous et au moins un évidement.

8. Véhicule automobile selon l'une quelconque des revendications précédentes,
**caractérisé en ce que**
les organes perturbateurs (10) sont des granulés.

9. Véhicule automobile selon la revendication 8,
**caractérisé en ce que**
les granulés ont au moins un sommet pointu et/ou une arrête.

10. Véhicule automobile selon la revendication 8 ou 9,
**caractérisé en ce que**
les granulés ont un diamètre compris entre 0,5 mm et 2,5 mm.

11. Véhicule automobile selon les revendications 8 à 10,
**caractérisé en ce que**
les granulés sont en une matière naturelle de granulé tel que du quartz, du corindon ou de l'émeri.

12. Véhicule automobile selon les revendications 8 à 10,
**caractérisé en ce que**
les granulés sont en une matière granuleuse synthétique.

13. Véhicule automobile selon l'une quelconque des revendications précédentes,
**caractérisé en ce que**
les organes perturbateurs (10) sont répartis à distance régulière les uns par rapport aux autres sur la couverture de pare-brise (7).

14. Véhicule automobile selon la revendication 13,
**caractérisé en ce que**
les organes perturbateurs (10) sont répartis à des distances de l'ordre de 1 à 4 cm les uns par rapport aux autres sur la couverture de pare-brise (7).

15. Véhicule automobile selon l'une quelconque des revendications précédentes,
**caractérisé en ce qu'**
au moins dans la zone du bord de la couverture de pare-brise (7) plusieurs organes perturbateurs (10) sont prévus sur le côté de la couverture de pare-brise (7) tourné vers le pare-brise (2).

16. Véhicule automobile selon l'une quelconque des revendications précédentes,
**caractérisé en ce que**
la répartition des organes perturbateurs (10) est choisie pour que lorsque la couverture de pare-brise (7') est déployée, les régions de la couverture de pare-brise (7') qui sont appliquées devant des régions particulièrement rigides du pare-brise (2), comportent un nombre particulièrement élevé d'organes perturbateurs (10).
